# EUROPEAN PATENT SPECIFICATION

(11) **EP 3 248 455 B1**
(45) Date of publication and mention of the grant of the patent: **09.12.2020**
(21) Application number: 17172284.6
(22) Date of filing: 22.05.2017
(51) Int. Cl.: A01G 13/02

(54) **DEVICE FOR PROTECTING PLANTS OR CROP FIELDS FROM NATURAL EVENTS SUCH AS SNOW AND RAIN**
VORRICHTUNG ZUM SCHUTZ VON PFLANZEN ODER ACKERFLÄCHEN VON NATUREREIGNISSEN WIE SCHNEE UND REGEN
DISPOSITIF POUR PROTEGER DES PLANTES OU DES CHAMPS AGRICOLES CONTRE LES ÉVÉNEMENTS NATURELS TELS QUE LA NEIGE ET LA PLUIE

(30) Priority: 23.05.2016 IT UA20163692
(43) Date of publication of application: 29.11.2017
(73) Proprietor: Rubini, Roberto, 24010 Lenna (BG) (IT)
(72) Inventor: Rubini, Roberto, 24010 Lenna (BG) (IT)
(74) Representative: Fisauli, Beatrice A. M.

(56) References cited:
- WO-A1-2014/060289
- DE-A1-102013 002 825
- DE-U1- 20 022 028
- US-A- 593 654
- US-A1- 2008 148 631

## Description

The present invention concerns a device typically for protecting plants, both in the form of crops and in other forms, on open ground and crop fields and other fields, from natural events, generally of a destructive nature, both atmospheric events, such as hail, heavy rain or hot summer sun, and other natural events, such as animals, e.g. insects. The device according to the invention can also be used to shade the aforesaid plants and, if necessary, also to water the plants with a supply of accumulated rainwater.

Various types of protections or coverings are known in the agricultural sector for protecting plants and/or their fruits from extraordinary natural events, which often cause damage to the plants, such as hail or heavy rain. US 2008/148631 A1 describes an apparatus for promoting plant growth in arid environment. The apparatus has an umbrella-like structure, having a shade plate connected to a main support body by a connecting rod. The latter has a first end having slidable means for attaching to a mid-height of main support body and a second end hinged in the under side of the shade panel.

Many of these known protections comprise a plurality of nets supported by a supporting structure, which allows them to remain spread out above the plants to be protected.

Examples of these protections are described in EP 1618782 A1, EP 2875721 A1, FR 2883320 A1, WO 2012/175546 A1, WO 2014/060289 A1.

However, these types of known protections are equipped with systems for unwinding/winding the nets that are bulky and impractical to operate or, in any case, complicated and costly to produce and install.

Manual equipment in particular requires considerable time and the use of skilled labour to perform the operations required to unwind or wind the nets correctly. These difficulties are even greater when the aforesaid operations require to be carried out urgently, for example due to the imminent arrival of bad weather or a potentially harmful environmental change.

Moreover, the supporting structures of the nets generally comprise a series of vertical poles between which cables or crossbars extend, positioned at a height at least greater than the height of the plants to protect. As these structures are fixed, they often hamper or prevent the passage of agricultural vehicles or other self-propelled equipment used to treat the plants or to harvest their parts, such as flowers, leaves or fruits.

Besides this, the aforesaid structures and the related systems for unwinding/winding the nets are prevalently usable on flat or in any case even ground.

In this context, the object of the present invention is to propose a protective device for plants, both in the form of crops and in other forms, or crop fields, that overcomes the problems of the prior art described above.

It is therefore an object of the present invention to propose a device that can be managed and operated simply without the use of labour.

Another object of the present invention is to propose a device that is simple to produce and has limited costs.

Yet another object of the present invention is to provide a modular device that allows the creation of a protective system that can be adapted to the size and shape of the ground on which it is to be installed.

A further object of the present invention is to provide a device that is simple and rapid to install, does not require the production of dedicated systems and, if necessary, can be moved and reconfigured.

In addition to the aforesaid objects, it is also an object of the present invention to produce a device that, besides offering plants suitable protection against hail, rain and insects, can store rainwater and distribute it to the plants in a controlled way.

These objects are achieved by a device for protecting said goods, in particular plants or crop fields, from undesirable natural events, generally of a destructive nature, both atmospheric and of other type, such as caused by animals, comprising:
- supporting poles aligned with one another;
- a crossbar supported by said supporting poles and maintained above the aforesaid goods to be protected; and
- at least a net with a first end arranged along said crossbar and a second end, opposite the first, that can be moved away from said crossbar and/or downward.

According to the invention, the device further comprises first arms, positioned at least at the ends of the crossbar, able to rotate between a closed position in which they are substantially parallel to the posts or perpendicular to the ground, and an open position in which they are arranged transversely with respect to said poles and project therefrom on one side of the device.

According to the invention, said net can be arranged in a gathered position, in which it is at least partially wound or gathered in proximity of the crossbar, or in a spread out position, in which it is at least partially spread out on top of the first arms to cover the goods to be protected. Advantageously, the first arms can engage the net to then be shifted between the closed position and the open position, so that the net is unwound and taken from the gathered up condition to the spread out condition.

With the first arms in closed position, the device has an extremely limited lateral footprint. On cultivated ground, where the plants or crops are arranged in rows, this allows tractors, grape harvesters or other agricultural vehicles and equipment to pass easily between them. Instead, in the open position, the first arms support the net above the plants to protect them from hail or heavy rain, or to shade them where necessary. In the condition in which the net is spread out down to ground level, it can act as protection against insects. In the spread out condition, or in other intermediate positions, the net is preferably held stretched tight by a counterweight applicable at the second end thereof.

According to an aspect of the invention, the crossbar can comprise a tubular profile provided with a slot through which the net can flow, in the passage between the spread out condition and the gathered condition. In the gathered condition, the net is therefore received in a compartment obtained inside the aforesaid profile. More in detail, according to a preferred variant, said net can be wound on and unwound from a shaft supported rotatably inside the profile.

Therefore, the tubular profile has the function of protecting the net from the wind, from the sun's rays and from the weather, when the device is not operating and the net is in the gathered condition, extending its useful life. Moreover, in this condition the net is less exposed to the wind, limiting "the sail effect" that could make the protective device unstable or even overturn it in the event of strong wind.

According to another aspect of the invention, the shaft can be rotated by a motor, preferably electric. Advantageously, said motor can be controlled by a control unit associated with a control device. Therefore, the protective device can be operated automatically, or in any case practically and rapidly, without requiring the use of labour. Therefore, the protective device according to the invention is particularly effective for use in agriculture, where it is necessary to cover vast surfaces employing tens or hundreds of devices positioned side by side.

According to another aspect of the invention, the control device can comprise remote controls, mobile phones, smartphones, tablets, sensors, for example weather sensors, or manual switches. The control unit can be configured to be associated with one or more of the aforesaid control devices.

Therefore, the protective device can be activated remotely, to spread out or gather the net based on need, without having to go physically close to it. In particular, according to a preferred aspect, the control unit can comprise a receiving/transmitting module to receive commands through the GSM, GPRS or 3G/4G network or a receiving/transmitting radio frequency module, or both.

According to another aspect of the invention, the device can be provided with solar panels applied to the crossbar and, preferably, with at least one accumulator connected thereto. The electrical energy produced by the solar panels can therefore be accumulated and used to supply the electric motor, the control unit or other electrical or electronic instruments mounted on the protective device or external thereto. As the device thus configured is energy independent, it is not necessary to provide a dedicated power supply network, with a considerably saving in times and costs for its installation.

According to another aspect of the invention, the device can comprise further second arms rotatable between a closed position, in which they are substantially parallel to the poles or perpendicular to the ground, to an open position in which they are arranged transversely with respect to said poles and project therefrom on an opposite side of the device with respect to the first arms. The device further comprises a second net with a first end arranged along the crossbar and a second end, opposite the first, that can be moved away from said crossbar in an opposite direction with respect to the first net and/or downward.

According to this embodiment, a single device can cover a larger area with respect to prior art devices and, therefore, a larger number of plants. Moreover, the device is balanced through two sets of arms that extend from both sides of the crossbar.

Preferably, said second net can be wound on and unwound from the same shaft on which the first net is wound. Therefore, the two nets are spread out or gathered simultaneously by means of the same motor. The coordinated and symmetrical movement of the nets and of the arms contributes to the balance of the device.

Alternatively, the second net can be wound on or unwound from a further shaft, also supported rotatably inside the tubular profile and preferably connected to another motor.

According to another aspect of the invention, in proximity of the second end, the net can comprise a portion made of a waterproof material that, with the net gathered, projects beyond the slot of the tubular profile in a sloping direction. When the device is not operating, i.e., when the arms are closed, said portion can convey rain water and/or condensate inside said tubular profile. The water thus collected can subsequently be used to water the plants in the vicinity of the device.

For this purpose, according to an aspect of the invention, the protective device can comprise at least one tank to receive the water accumulated in the tubular profile and valve means, connected to the tank, to distribute the water collected to the plants.

According to a preferred variant, said valve means can be connected to the control unit of the device, so as to be controllable by the control device associated with the control unit.

Further characteristics and advantages of the present invention will be more apparent from the description of a preferred, but not exclusive, example of embodiment of a device for protecting plants or crop fields from natural events, generally of a destructive nature, both atmospheric events, such as hail, heavy rain or hot summer sun, and other natural events, such as animals, e.g. insects, as illustrated in the accompanying figures, wherein:
- Fig. 1 is a perspective view of the protective device according to the invention, in a closed position and not operating;
- Fig.2 is a side view of the device of Fig. 1 during the opening step;
- Fig. 3 is a perspective view of the device of Fig. 1, in completely open position and operating;
- Fig.4 is a side view of the device of Fig. 1 during the closing step;
- Fig. 5 is a cross sectional view of the tubular profile of the device of Fig. 1.

With reference to the accompanying figures, the protective device, indicated as a whole with 1, comprises a pair of supporting poles 10 on which a crossbar 20 rests.

Said poles 10 can be positioned on and anchored to the ground in proximity of plants P or on crop fields to be protected. In the agricultural sector, where the plants are often arranged in rows or lines, the poles 10 can advantageously be arranged along the direction of the row so as not to obstruct the corridors between two adjacent rows. For this reason, the device according to the invention is particularly, but not exclusively, suitable for use in agriculture to protect fruit plants.

The device can also comprise several supporting poles 10 aligned with one another, i.e., arranged along a direction substantially rectilinear and parallel to the extension of the crossbar 20.

The height of the poles 10 can be selected as a function of the height of the plants P and, in detail, so that the crossbar 20 is held at least above the tops of the plants. According to a preferred variant, the poles 10 can comprise two mutually sliding portions 11, 12, to vary the total length of the pole.

To anchor the device securely to the ground, at the base of the poles 10, or of the tanks 14, there are provided rings 17, hooks or the like, adapted to be fastened to anchoring means, such as stakes, inserted in the ground.

The length of the crossbar 20 can be selected according to need. Typically, to make the device easy to transport and install, the length of the crossbar is preferably comprised between 1 meter and 6 meters. However, the crossbar can have greater lengths, for example up to 10 meters or more.

According to a preferred variant of the invention, the crossbar 20 comprises a tubular shaped profile 21, open at least along an upper edge or on the sides. In the embodiment illustrated, the profile 21 is provided with an opening on the upper part having the form of a slot 22 that extends substantially for the whole of its length.

Preferably, the profile 21 has a constant section that allows it to be produced by means of an extrusion process. To give the protective device the necessary stiffness and strength, the profile 21 is preferably made of metal and, more preferably, aluminium or similar alloys.

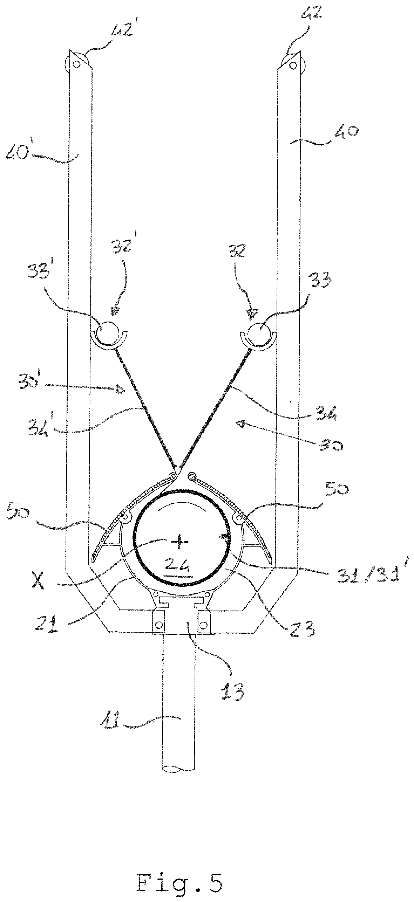

The section of the profile 21 defines an inner compartment 23 containing at least one shaft 24, supported so as to be able to rotate about its axis X (Fig. 5).

Joined to said shaft 24, at a first end 31 (fig. 5) is at least a first net 30, which, following rotation of said shaft 24, can be wound on or unwound from it passing through the slot 22 obtained in the profile 21.

According to another variant, not illustrated in the figures, the device can comprise several nets positioned close to one another along the axis of the shaft 24 or, alternatively, several shafts positioned side by side along their axis, with each of which a net is associated. This variant can be more suitable in the case in which the crossbar 20 is of considerable length.

The first net 30 according to the invention has a mesh small enough to prevent the passage of hail or insects and to dissipate the drops of rain water, but at the same time large enough to allow air and vapour to pass through. Nets for applications of this type are well known in the sector and therefore will not be described in greater detail.

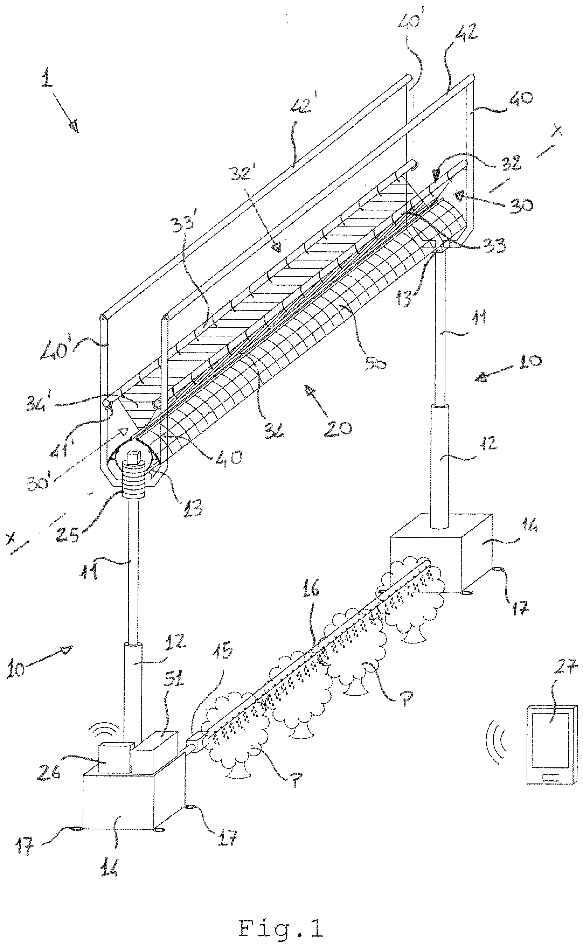

According to the invention, in a non-operating condition of the device, the first net 30 can be arranged in a gathered position in which it is wound almost completely on the shaft 24 (Fig. 1).

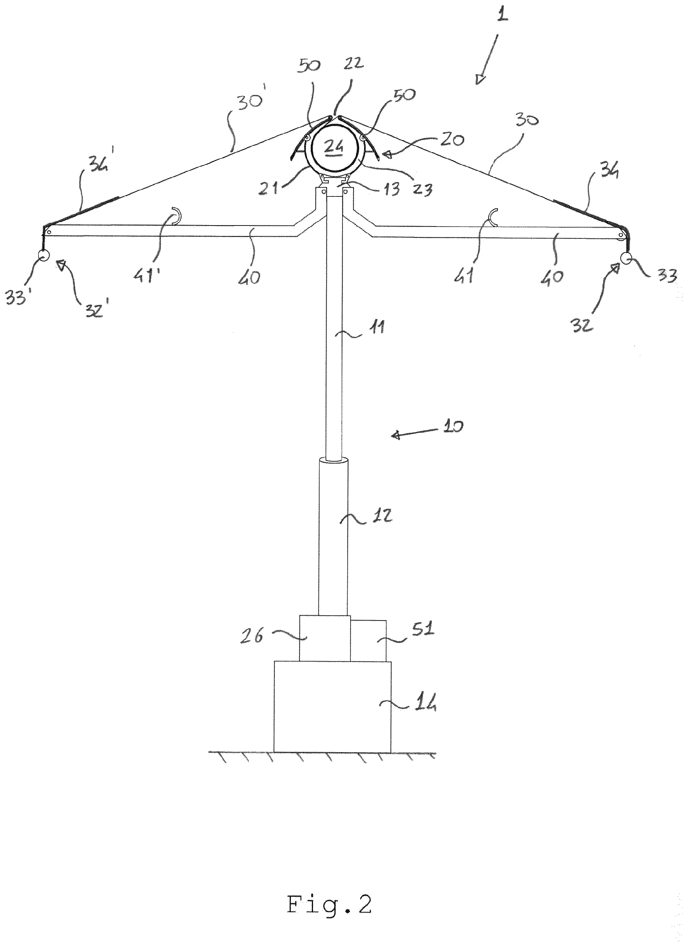

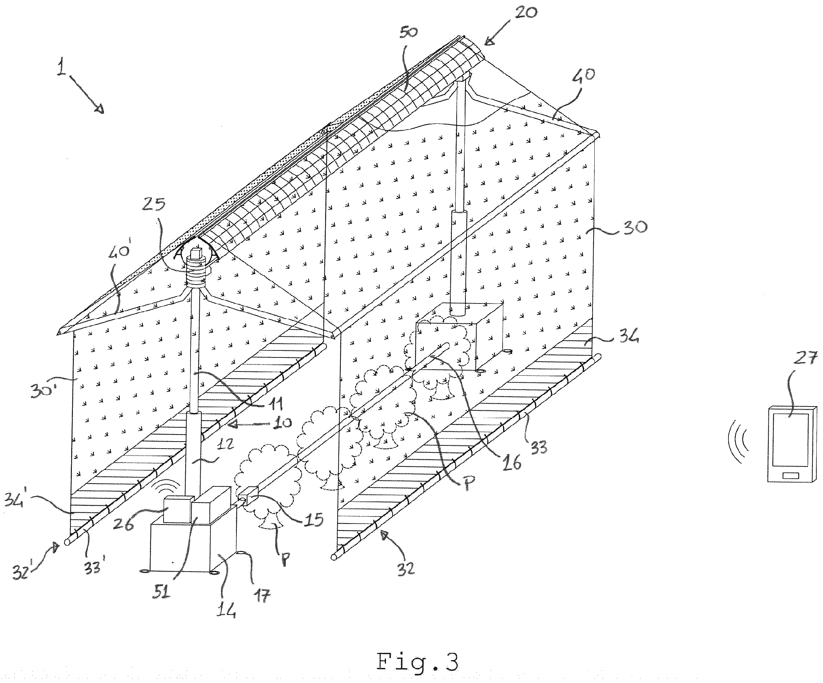

From this gathered position, the first net 30 can be unwound from the shaft 24 toward a spread out position in which a second free end 32, opposite the first, is moved laterally away from crossbar 20 and/or downward (Figs. 2, 3).

According to the invention, to allow the net 30 also to cover plants P with leaves with a large surface area, or several rows of plants, the device is provided with at least a pair of first arms 40 positioned at least at the end of the crossbar 20.

Said first arms 40 can be hinged to the crossbar 20 or, as in the example illustrated, to a support 13 positioned at the top of the poles 10. Therefore, the first arms 40 can rotate freely between a closed position in which they are substantially parallel to the poles 10 or perpendicular to the ground (Fig. 1), and an open position in which they are arranged transversely with respect to said poles 10 and project therefrom on one side of the device (Fig. 3).

The function of the first arms 40 is to support the first net 30 in the spread out position and, therefore, to increase the area under this latter in which the plants P can be protected. Preferably, interposed between the arms 40 is a longitudinal support 42 on which the first net 30 can slide when it is unwound or rewound beyond the ends of the arms 40, toward the ground. For this purpose, said longitudinal support 42 preferably has a cylindrical shape to facilitate sliding of the first net 30 and, more preferably, is hinged to the arms so as to be able to rotate about its axis.

In the example in Fig. 3, the first net 30 is completely spread out downward and its second end 32 is substantially at ground level. In this configuration, in addition to the device protecting the plants P from hail or rain, it also performs the function of protecting them from insects.

However, the device can be used with the net partially spread out, for example spread only over the first arms, or in an almost totally gathered position, with the first arms in an intermediate position between the closed and open positions. These positions are suitable, for example, to shade the plants P.

Advantageously, according to the invention, the first arms 40 can engage the net during winding on or unwinding from the shaft 24, to be moved between the closed position and the open position.

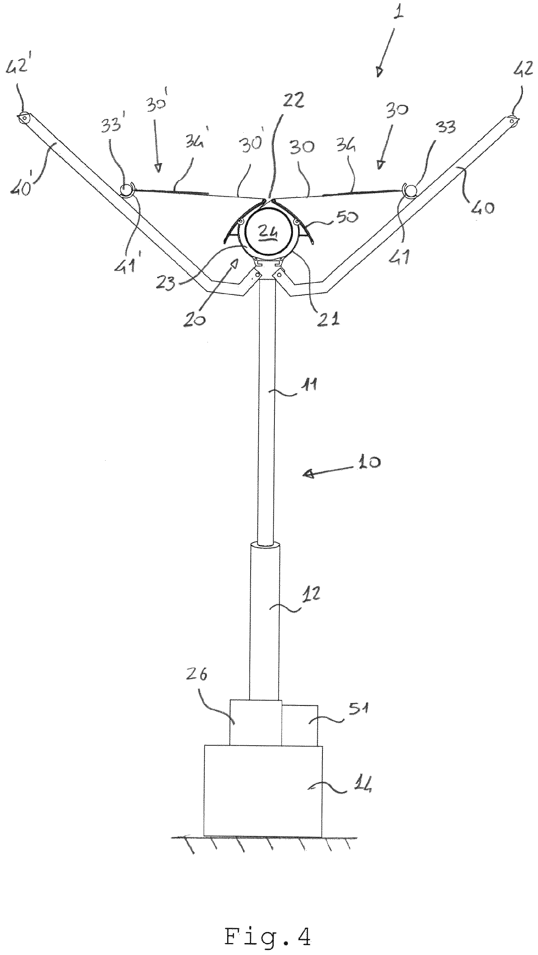

According to a preferred embodiment, the first arms 40 are provided with hooks 41 adapted to engage a rod 33 fastened at the second end 32 of the first net 30, when this is almost totally gathered (Fig. 4). In practice, between the closed and the open positions, the first arms 40 are retained by the first net 30 which, through gravity, prevents it from rotating toward the open position.

Moreover, the rod 33 acts as counterweight to facilitate unwinding of the first net 30 and to hold it stretched tight in the completely spread out position or in the intermediate positions.

Preferably, the first arms 40 are associated with limit stop means, not illustrated, which limit the downward rotation, defining the aforesaid open position. In this position, the first arms are preferably sloping downward, so as to facilitate sliding of the rod 33 during unwinding of the net 30.

According to a preferred variant of the invention, rotation of the shaft 24 is implemented by a motor 25, preferably electric. Control of the motor 25 is entrusted to a control unit 26, generally mounted on the device, associated with a control device 27.

According to a preferred aspect, the control unit 26 is provided with a receiving/transmitting module for receiving commands through the GSM, GPRS or 3G/4G network and, if necessary, sending information on the state of the protective device. Said commands can be imparted remotely by a mobile phone, for example through text messages, or by a smartphone or tablet, through text messages or by means of dedicated software applications.

Alternatively, or in addition to the configuration described above, the control unit 26 can be provided with a further receiving/transmitting radio frequency module, for example configured for the 868 MHz band, associated with one or more remote controls.

A further manual control, for example a switch, can be provided on the device to control unwinding or gathering of the first net also in the case in which the remote control devices are not available or functioning.

According to another variant, in addition to the aforesaid control devices, the control unit 26 can be associated with, or connected to, sensors, for example weather sensors, not illustrated, installed on or close to the protective device, and if necessary usable by several devices installed in a given area of ground.

These sensors can, for example, comprise sensors to detect the intensity of the wind or of sunlight, the presence of rain, or the like.

In this case, even if there is no specific command from a user monitoring the device, the control unit can operate the motor 25 to spread out or gather the first net 30 as a function of the weather or other environmental conditions.

According to a preferred aspect, the control unit 26 is connected to an encoder associated with the motor 25 and, preferably, also to limit stop sensors of the first arms 40, in the open and closed positions.

Due to this, the control unit can determine the exact position of the first arms 40 and the degree of unwinding of the first net 30. The control unit 26 can therefore stop the motor 25 autonomously during gathering of the net 30 when said first arms have reached the closed position or, in the opening step, stop the motor 25 leaving the net in different positions.

In a preferred variant of the invention, the first net 30 can comprise a portion 34, made of a waterproof material, positioned at the second free end 32. This portion has the task of conveying rain water and/or condensate inside said profile 21 when the first net 30 is in the gathered condition. In fact, in this condition the portion 34 projects beyond the slot 22 of the profile 21 in a sloping direction, acting as chute for conveying the water inside the profile 21.

The length of the portion 34 is such that at least a portion of mesh net is not wound around the shaft 24 in the condition with the net gathered. In this way, the water conveyed beyond the slot can subsequently drip through the length of unwound net and accumulate on the bottom of the profile 21.

Preferably, the device is provided with tanks 14, located at the base of the poles 10, and connected to the tubular profile to receive the water collected.

Advantageously, the tanks 14 can act as stabilizing bases for the poles 10 when they are at least partly filled with water. Said tanks are preferably made of plastic material, if necessary treated to prevent or reduce the formation of algae inside them.

Said tanks 14 are also provided with valve means 15 to discharge the water collected into the surrounding ground for the purpose of watering the plants P. To facilitate distribution of the water, said valve means are connected to drip irrigation ducts 16 available in proximity of the base of the plants to be watered. Advantageously, according to the invention, said valve means can comprise a solenoid valve connected to the control unit 26 and, preferably, controllable by means of the control device 27 used to operate the net and the protective device.

In a preferred embodiment, the device can comprise further second arms 40' substantially identical to the first arms 40. Also, the second arms 40' are rotatable between a closed position, in which they are substantially parallel to the poles 10 or perpendicular to the ground, and an open position in which they are arranged transversely with respect to the poles and project therefrom on an opposite side of the device with respect to the first arms 40. In this variant, the device also comprises a second net 30' with a first end 31' arranged along the crossbar 20 and a second end 32', opposite the first, that can be moved away from the crossbar in an opposite direction with respect to the first net 30.

In the variant illustrated, both the nets 30, 30' can be simultaneously wound on or unwound from the same shaft 24. Therefore, the two nets 30, 30' converge toward the slot 22 of the profile and are wound in pairs around said shaft 24.

The various parts of the second arms 40' and of the second net 30' are represented in the figures with the same numbers used for the first arms 40 and for the first net 30, accompanied by an apostrophe. As the aforesaid parts are substantially identical, they will not be described again.

According to a preferred variant, the protective device is equipped with solar panels 50 applied to the outer surface of the profile 21. The electricity produced can be stored in a battery 51, installed on the device, to which the control unit 26, the motor 25 and the solenoid valve 15 are connected. Advantageously, the device can be provided with an inverter to transform the direct current produced by the solar panels into alternating current that can be used by electrical equipment to be used in the vicinity of the protective device and that, if desired, can be sent to the electricity grid in return for payment from the grid operator.

The invention has been described purely for illustrative and non-limiting purposes, according to some preferred embodiments. Those skilled in the art may find numerous other embodiments and variants, all falling within the scope of protection of the claims below.

## Claims

1. Device (1) for protecting plants (P) or crop fields or other fields from natural events, generally of a destructive nature, comprising:
- supporting poles (10) aligned with one another;
- a crossbar (20) supported by said supporting poles (10) and maintained above the aforesaid goods to be protected;
- at least a first net (30) with a first end (31) arranged along said crossbar (20) and a second end (32), opposite the first, that can be moved away from said crossbar and/or downward;
**characterized in that** first arms (40) are positioned at least at the ends of the crossbar (20), rotatable between a closed position in which they are substantially parallel to the posts (10) or perpendicular to the ground, and an open position in which they are arranged transversely with respect to said poles (10) and project therefrom on one side of the device; and **in that**
said net (30) is available in a gathered position, in which it is at least partially wound or gathered in proximity of the crossbar (20), or in a spread out position, in which it is at least partially spread out on top of the first arms (40) to cover the goods to be protected, said first arms being able to engage the net to be shifted between the closed position and the open position when the net is unwound or wound between the gathered up condition and the spread out condition.

2. Device according to claim 1, **characterized in that** the crossbar comprises a tubular profile (21) provided with a slot (22) through which the net (30) can flow, said net being windable onto and unwindable from a shaft (24) supported rotatably inside the aforesaid profile (21).

3. Device according to claim 2, **characterized in that** said shaft (24) is rotatable by means of an electric motor (25), controllable by a control unit (26) associated with a control device (27).

4. Device according to claim 3, **characterized in that** said control device (27) comprises one or more of the following devices:
- remote controls;
- mobile phones, smartphones or tablets;
- weather sensors;
- manual switches.

5. Device according to any one of the preceding claims, **characterized in that** it comprises solar panels (50) applied to the crossbar (20) and at least one accumulator (51) connected to said solar panels.

6. Device according to any one of claims 2 to 5, **characterized in that** it comprises second arms (40') rotatable between a closed position, in which they are substantially parallel to the poles (10) or perpendicular to the ground, and an open position, in which they are arranged transversely with respect to said poles (10) and project therefrom on an opposite side of the device with respect to the first arms (40), and at least a second net (30') with a first end (31') arranged along said crossbar (20) and a second end (32') opposite the first, that can be moved away from said crossbar (20) in an opposite direction with respect to the first net (30) and/or downward.

7. Device according to claim 6, **characterized in that** said second net (30') can be wound on or unwound from the same shaft (24) on which the first net (30) is wound or a further shaft rotatably supported inside the tubular profile (21).

8. Device according to any one of claims 2 to 7, **characterized in that** the net (30, 30'), in proximity of the second end (32, 32'), comprises a portion (34, 34') made of a waterproof material that, in the condition with the net gathered, projects beyond the slot (22) of the tubular profile (21) along a sloping direction, said portion (34, 34') conveying the rain water and/or condensate inside said tubular profile (21).

9. Device according to claim 8, **characterized in that** it comprises at least a tank (14) to receive the water accumulated in the tubular profile (21) and valve means (15), connected to the tank (14), to distribute the water collected to the plants (P).

10. Device according to claim 9, **characterized in that** said valve means (15) are connected to the control unit (26) and are controllable through the control device (27).

11. Device according to any one of the preceding claims, in which the first arms (40) are provided with hooks 41 adapted to engage a rod 33 fastened at the second end 32 of the first net 30, when this is almost totally gathered.

12. Device according to any one of the preceding claims, in which the first arms (40) are associated with limit stop means, which limit the downward rotation, defining the aforesaid open position.

## Patentansprüche

1. Vorrichtung (1) zum Schutz von Pflanzen (P) oder Getreidefeldern oder anderen Feldern vor Naturereignissen, die im allgemeinen zerstörerischer Natur sind, umfassend
- aufeinander ausgerichtete Stützpfähle (10);
- eine Querstange (20), die von den besagten Stützpfosten (10) getragen und über den oben genannten zu schützenden Gütern gehalten wird;
- mindestens ein erstes Netz (30) mit einem ersten Ende (31), das längs der besagten Querstange (20) angeordnet ist, und einem zweiten Ende (32), das dem ersten gegenüberliegt und von der besagten Querstange weg und/oder nach unten bewegt werden kann;
**dadurch gekennzeichnet, dass** erste Arme (40) zumindest an den Enden der Querstange (20) positioniert sind, drehbar zwischen einer geschlossenen Position, in der sie im Wesentlichen parallel zu den Pfosten (10) oder senkrecht zum Boden verlaufen, und einer offenen Position, in der sie quer in Bezug auf die besagten Pfosten (10) angeordnet sind und von diesen auf einer Seite der Vorrichtung herausragen; und **dadurch gekennzeichnet, dass** das besagte Netz (30) zur Verfügung steht in einer zusammengerafften Position, in der es zumindest teilweise in der Nähe der Querstange (20) aufgerollt oder gerafft ist, oder in einer ausgebreiteten Position, in der es zumindest teilweise über den ersten Armen (40) ausgebreitet ist, um die zu schützenden Güter abzudecken, wobei die besagten ersten Arme in der Lage sind, das Netz in Anspruch zu nehmen, um zwischen der geschlossenen Position und der offenen Position verschoben zu werden, wenn das Netz zwischen dem zusammengerafften Zustand und dem ausgebreiteten Zustand abgewickelt oder aufgewickelt wird.

2. Vorrichtung gemäß Anspruch 1, **dadurch gekennzeichnet, dass** die Querstange ein rohrförmiges Profil (21) umfasst, das mit einem Schlitz (22) versehen ist, durch den das Netz (30) laufen kann, wobei das besagte Netz auf eine Welle (24) auf- und von dieser Welle abwickelbar ist, die drehbar im Inneren des oben genannten Profils (21) gestützt wird.

3. Vorrichtung gemäß Anspruch 2, **dadurch gekennzeichnet, dass** die besagte Welle (24) mittels eines Elektromotors (25) drehbar ist, steuerbar durch eine Steuereinheit (26), die mit einer Steuervorrichtung (27) verbunden ist.

4. Vorrichtung gemäß Anspruch 3, **dadurch gekennzeichnet, dass** die besagte Steuervorrichtung (27) eine oder mehrere der folgenden Vorrichtungen umfasst:
- Fernbedienungen;
- Mobiltelefone, Smartphones oder Tablets;
- Wetter-Sensoren;
- Handschalter.

5. Vorrichtung gemäß einem jeglichen der vorhergenannten Ansprüche, **dadurch gekennzeichnet, dass** sie Solarpaneele (50), die an der Querstange (20) angebracht sind, und mindestens einen Akkumulator (51) umfasst, der mit den besagten Solarpaneelen verbunden ist.

6. Vorrichtung gemäß einem jeglichen der Ansprüche 2 bis 5, **dadurch gekennzeichnet, dass** sie zweite Arme (40') umfasst, die drehbar sind zwischen einer geschlossenen Position, in der sie im Wesentlichen parallel zu den Pfosten (10) oder senkrecht zum Boden verlaufen, und einer offenen Position, in der sie quer zu den besagten Pfosten (10) angeordnet sind und von diesen auf einer gegenüberliegenden Seite der Vorrichtung in Bezug auf die besagten ersten Arme (40) herausragen, und mindestens ein zweites Netz (30') mit einem ersten Ende (31'), das längs der besagten Querstange (20) angeordnet ist, und einem zweiten Ende (32') gegenüber dem ersten, das von der besagten Querstange (20) in einer entgegengesetzten Richtung in Bezug auf das erste Netz (30) und/oder nach unten bewegt werden kann.

7. Vorrichtung gemäß Anspruch 6, **dadurch gekennzeichnet, dass** das besagte zweite Netz (30') auf die gleiche Welle (24) aufgewickelt oder von der gleichen Welle abgewickelt werden kann, auf der das erste Netz (30) aufgewickelt ist, oder auf eine weitere Welle, die drehbar innerhalb des rohrförmigen Profils (21) gestützt wird.

8. Vorrichtung gemäß einem jeglichen der Ansprüche 2 bis 7, **dadurch gekennzeichnet, dass** das Netz (30, 30') in der Nähe des zweiten Endes (32, 32') einen Abschnitt (34, 34') aus einem wasserdichten Material umfasst, das, in dem Zustand, in dem das Netz gerafft ist, über den Schlitz (22) des rohrförmigen Profils (21) längs einer geneigten Richtung herausragt, wobei der besagte Abschnitt (34, 34') das Regenwasser und/oder Kondensat in das Innere des besagten rohrförmigen Profils (21) leitet.

9. Vorrichtung gemäß Anspruch 8, **dadurch gekennzeichnet, dass** sie mindestens einen Behälter zur Aufnahme des in dem rohrförmigen Profil (21) angesammelten Wassers und mit dem Behälter (14) verbundene Ventilmittel (15) zur Verteilung des gesammelten Wassers an die Pflanzen (P) umfasst.

10. Vorrichtung gemäß Anspruch 9, **dadurch gekennzeichnet, dass** die besagten Ventilmittel (15) mit der Steuereinheit (26) verbunden sind und durch die Steuervorrichtung (27) steuerbar sind.

11. Vorrichtung gemäß einem jeglichen der vorhergehenden Ansprüche, bei der die ersten Arme (40) mit Haken (41) versehen sind, die geeignet sind, in eine Stange (33) eingreifen zu können, die am zweiten Ende (32) des ersten Netzes (30) befestigt ist, wenn dieses fast vollständig gerafft ist.

12. Vorrichtung gemäß einem jeglichen der vorhergehenden Ansprüche, bei der die ersten Arme (40) mit Anschlagmitteln verbunden sind, die die Abwärtsdrehung begrenzen und die oben genannte offene Position definieren.

## Revendications

1. Dispositif (1) pour protéger des plantes (P) ou des champs agricoles ou d'autres champs contre les événements naturels, généralement de nature destructive, comprenant :
- des poteaux de support (10) alignés les uns par rapport aux autres ;
- une barre transversale (20) soutenue par lesdits poteaux de support (10) et maintenue au-dessus des biens à protéger susmentionnés ;
- au moins un premier filet (30) avec une première extrémité (31) disposée le long de ladite barre transversale (20) et une deuxième extrémité (32), opposée à la première, qui peut être éloignée de ladite barre transversale et/ou déplacée vers le bas ; **caractérisé par le fait que** des premiers bras (40) sont positionnés au moins aux extrémités de la barre transversale (20), pouvant tourner entre une position fermée dans laquelle ils sont substantiellement parallèles aux poteaux (10) ou perpendiculaires au sol, et une position ouverte dans laquelle ils sont disposés transversalement par rapport auxdits poteaux (10) et font saillie de ceux-ci sur un côté du dispositif ; et **par le fait que** ledit filet (30) est disponible dans une position regroupée, dans laquelle il est au moins partiellement enroulé ou regroupé à proximité de la barre transversale (20), ou dans une position déployée, dans laquelle il est au moins partiellement déployé sur le dessus des premiers bras (40) pour couvrir les biens à protéger, lesdits premiers bras pouvant engager le filet pour être déplacé entre la position fermée et la position ouverte lorsque le filet est déroulé ou enroulé entre la condition regroupée et la condition déployée.

2. Dispositif selon la revendication 1, **caractérisé par le fait que** la barre transversale comprend un profil tubulaire (21) pourvu d'une fente (22) à travers laquelle le filet (30) peut coulisser, ledit filet pouvant être enroulé sur et déroulé d'un arbre (24) supporté de manière rotative à l'intérieur dudit profil (21).

3. Dispositif selon la revendication 2, **caractérisé par le fait que** ledit arbre (24) peut tourner au moyen d'un moteur électrique (25), pouvant être commandé par une unité de commande (26) associée à un dispositif de commande (27).

4. Dispositif selon la revendication 3, **caractérisé par le fait que** ledit dispositif de commande (27) comprend un ou plusieurs des dispositifs suivants :
- commandes à distance ;
- téléphones mobile, smartphones ou tablettes ;
- capteurs météorologiques ;
- interrupteurs manuels.

5. Dispositif selon l'une des revendications précédentes, **caractérisé par le fait qu'**il comprend des panneaux solaires (50) appliqués à la barre transversale (20) et au moins un accumulateur (51) connecté auxdits panneaux solaires.

6. Dispositif selon l'une des revendications de 2 à 5, **caractérisé par le fait qu'**il comprend des seconds bras (40') pouvant tourner entre une position fermée, dans laquelle ils sont sensiblement parallèles aux poteaux (10) ou perpendiculaires au sol, et une position ouverte, dans laquelle ils sont disposés transversalement par rapport auxdits poteaux (10) et en font saillie sur un côté opposé du dispositif par rapport aux premiers bras (40), et au moins un second filet (30') avec une première extrémité (31') disposée le long de ladite barre transversale (20) et une seconde extrémité (32') opposée à la première, qui peut être éloignée de ladite barre transversale (20) dans une direction opposée par rapport au premier filet (30) et/ou vers le bas.

7. Dispositif selon la revendication 6, **caractérisé par le fait que** ledit second filet (30') peut être enroulé sur ou déroulé du même arbre (24) sur lequel le premier filet (30) est enroulé ou d'un autre arbre supporté de manière rotative à l'intérieur du profil tubulaire (21).

8. Dispositif selon l'une des revendications de 2 à 7, **caractérisé par le fait que** le filet (30, 30'), à proximité de la seconde extrémité (32, 32'), comprend une partie (34, 34') faite d'un matériau imperméable qui, dans l'état où le filet est regroupé, fait saillie au-delà de la fente (22) du profil tubulaire (21) le long d'une direction inclinée, ladite partie (34, 34') transportant l'eau de pluie et/ou le condensat à l'intérieur dudit profil tubulaire (21).

9. Dispositif selon la revendication 8, **caractérisé par le fait qu'**il comprend au moins un réservoir (14) pour recevoir l'eau accumulée dans le profilé tubulaire (21) et des moyens à vanne (15), reliés au réservoir (14), pour distribuer l'eau collectée aux plantes (P).

10. Dispositif selon la revendication 9, **caractérisé par le fait que** lesdits moyens à vanne (15) sont connectés à l'unité de commande (26) et sont contrôlables par le biais du dispositif de commande (27).

11. Dispositif selon l'une des revendications précédentes, dans lequel les premiers bras (40) sont munis de crochets 41 adaptés pour engager une tige 33 fixée à la deuxième extrémité 32 du premier filet 30, lorsque celui-ci est presque totalement regroupé.

12. Dispositif selon l'une des revendications précédentes, dans lequel les premiers bras (40) sont associés à des moyens de butée, qui limitent la rotation vers le bas, définissant la position ouverte susmentionnée.
